# EUROPEAN PATENT APPLICATION

(11) **EP 1 182 903 A1**
(43) Date of publication of application: **27.02.2002**
(21) Application number: 00307179.2
(22) Date of filing: 21.08.2000
(51) Int. Cl.: H04Q 11/00

(54) **Point-to-point protection in point-to-multipoint networks**

(71) Applicant: LUCENT TECHNOLOGIES INC., Murray Hill, New Jersey 07974-0636 (US)
(72) Inventor: Meijen, Johan Theodorus, 3755 HK Eemnes (NL); Heijningen, Pieter Hendrik, 1343 AA Almere (NL)
(74) Representative: Buckley, Christopher Simon Thirsk

(57) **Abstract**

A method for protection switching in a point-to-multipoint network, the point-to-multipoint network including a first network end node connected by at least one first connection to at least one second network end node, wherein at least one protected second network end node of the at least one second network end nodes is further connected to the first network end node via at least one second connection, characterised in that as protection switching method a linear protection switching method is applied to at least one point-to-point part of the point-to-multipoint network independently from switching of other point-to-point parts, whereby a point-to point part includes at least said first network end node connected to one second network end node. Hereby, switching only protected second network end nodes is possible without further protocols. Further a network end node system for performing a method according to the invention and a network comprising such network end node system are provided.

## Description

The invention relates to a method for protection switching in a point-to-multipoint network, the point-to-multipoint network including a first network end node connected by at least one first connection to at least one second network end node, wherein at least one protected second network end node of the at least one second network end nodes is further connected to via at least one second connection to said first network end node. The invention also relates to a network end node and network end node system respectively arranged for protection switching and a point-to-multipoint network including such a network end node system.

In this application the following terminology is used. A *point-to-multipoint data network* is a network arranged for transmitting data, like voice, video or computer data, from a first network end node (one point) via a first connection to a multiple of second network end nodes (multi-points) and transmitting data, in the reverse direction, from these second network end nodes to the first network end node. The data can be transmitted to a single individual second network end node or some second network end nodes or all second network end nodes. A *network end node* is a node, i.e. a network device physical or logical that forms an end of a network. Such a network end node can be the actual end of a network, such as a computer at home, or may be an end of the network that connects the network to other networks, like a router or ATM-switch. The network end node might for example also be a computer, a telephone-switch or an apparatus that converts light pulses sent through an optical fibre into electrical pulses to be transmitted via a copper cable. *FTTx networks* are networks where an outdoors Line Termination device (LT) is connected to a broadband optical fibre and the LT splits the broadband fibre into smaller optical fibres connected to Network Termination (NT) devices in a number of buildings. In FTTx, FTT stands for Fibre To The and x can for instance be H (Home), B (Business), O (Office) or C (Curb). PON (Passive Optical Network) is a FTTx type network without active parts between the LT and the NTs. A PON for example contains passive splitters for splitting the connections to the NTs. A *Line Termination device* or *LT* is a network end node that connects at least two networks to each other and forwards data from one network to another network. In this application an LT connects a point-to-multipoint network to another network, for example a Wide Area Network. Such an LT might for example be a switch, a router or a cross-connector. A *Network Termination device* or *NT* is the end node of a network, like a client computer in a client-server network or the telephone at home in a telephone network. *Network signals* are signals transmitted by the network. A number of these network signals may form a specific type of data packet required by the specific type of network, like a number of binary signals may form IP packets in a IP network, ATM cells in an ATM network or Ethernet packets in an Ethernet-network. A network signal may consist of a *payload* containing data transmitted by the network signal and an *overhead* containing information about the data packet, for example it's source address, destination address and the connection the network signal is transmitted through. A *redundant path* is a path that is used to transmit data in case of a failure in the working path. Closing the working path and switching the data flow in the network to the redundant path is called *protection switching*. This protection switching may be initiated by some automatic detected switch condition or by human interaction. A *linear protection switching* method is a switching method for a point-to-point connection, whereby the connection from one point in the network to another point in the network (hence point-to-point) is switched to the redundant path, as is for example known from International Telecommunications Union (ITU) recommendation G.841. The protection switching may be a *bi-directional* protection switching method whereby for a unidirectional failure (i.e. a failure affecting only one direction of data transmission), both directions including the affected direction and the unaffected direction, are switched. As a switching method also *unidirectional* protection switching is possible, whereby for a unidirectional failure only the affected direction is switched. In a *1+1* protected network, a redundant path is dedicated as a backup facility to each working path whereby the normal traffic is transmitted simultaneously on the working path and the redundant path and a selection between the working and redundant path is made based on some predetermined criteria, such as signal fail and signal degrade indications. In the *1:n* architecture type, 1 dedicated redundant path is a shared backup facility for n working paths. Since the path is shared by n working path, the bandwidth of the redundant path should be allocated in such a way that it may be possible to protect at least the working path with the largest transport capacity in case the redundant path is available.

In any network errors may occur, for example connections may be broken because of cable cuts, or a network end node may be out of order for example because of a receiver failure.

In order to protect the data flow in a point-to multipoint network it is known, for example from ITU recommendation G.983.1, to provide different routes to each network end node. From said recommendation it is known to duplex the paths of the network. In addition to the working path the network is provided with a so called redundant path, that is used in case the working path is out of order. From G.983.1 it is known to provide in either a partial or, as in the architecture proposed in option C of recommendation G.983.1, a fully duplicated path. If the working path is damaged, the redundant path is activated and the network connections are maintained.

In G.983.1 the integrity of the entire network is checked. If the network is found not to be intact, the network switches to the redundant path. The activation of the redundant path, however, requires a communication link and protocol between the network end nodes in order to activate the redundant network, just like a start-protocol is used when a network is switched on or a "hand-shake" protocol if a network connection is established. Such a protocol is especially necessary in option C of G.983.1 because the redundant network differs from the working network in physical properties (distance between network end nodes, other types of network end nodes) and the network end nodes have to be switched on and synchronised with each other. Such a protocol has to be standardised by the ITU in order to maintain compatibility of network devices from different manufacturers. Standardisation takes time and results in loss of flexibility in network architecture design.

It is known to solve this problem by providing a stand-by or hot redundant network, as in J.L. de Groote et all. "Redundancy and protection-switching in APON systems", Broadband Access and Technology p. 119-126. In this "de Groote" paper a network according to Option C of G.983.1 is provided where the redundant network is active and both the working and the redundant network are used to transmit data if the network is intact.

In the "de Groote" paper, the network end nodes are able to perform a "sanity check" between a working Line Termination, a Network Termination and a redundant Line Termination in order to synchronise the configurations of the network end nodes. If a Network Termination detects an flaw in the working connection, like a loss of data packets or degradation of the network signals, it switches it self off. This is noticed by the working Line Termination which then switches to the redundant path. By this switching the working LT switches itself off, the standby LT is activated and all NTs are synchronised to the standby LT.

Protection switching as is described in the "de Groote" paper allows to switch to the redundant network fast and easy. In such a network the working LT turns off and all corresponding NT's are switched to the redundant LT. A problem is, however, that not all NT's are connected to the redundant LT. Often redundancy is a higher level of service in a network, which is given to a user who pays more or performs more critical tasks in the network. So, in general, not all second network end nodes are protected and these unprotected second network end nodes are disconnected from the network if the network switches to the redundant network.

Moreover, point-to-multipoint networks are more and more being applied in FTTx networks. If one connection is lost the entire working FTTx network is shut down. A problem is that sometimes repair can take quite a while if the building in which the NT of which the connection failed is located is not accessible, for example because the user is on holiday. As a result, in the meantime the entire working network cannot be used, which is a serious loss of data capacity.

The invention intends to solve these problems. Therefore, in accordance with the invention a method for protection switching as indicated above is characterised in that as protection switching method a linear protection switching method is applied to at least one point-to-point part of the point-to-multipoint network independently of switching of other point-to-point parts whereby a point-to point part includes said first network end node connected to one second network end node via at least one of said at least one first connections and said at least one second connections.

The use of such a method makes it possible to switch only the damaged or inaccessible second network end nodes to the second connection, while maintaining the still functioning connections without the necessity of a switching protocol. This allows to uphold connections to unprotected second network end nodes and removes the necessity of a quick repair of the network connection.

The invention further provides a first network end node for protection switching as in claim 16. Such a network end node allows to perform a method according to the invention.

Furthermore, the invention provides a network end node system and a point-to-multipoint data network, including at least one such a network end node.

Further details and aspects of the invention will be described with reference to the attached drawing.
Fig. 1 diagrammatically shows an example of a data network according to the invention and in compliance with G. 983.1;
Fig. 2 diagrammatically shows the data network of fig. 1 with a broken connection;
Fig. 3 diagrammatically shows an example of a data network in accordance with the invention after applying the method of the invention;
Fig. 4 diagrammatically shows an example of a LT according to the invention;

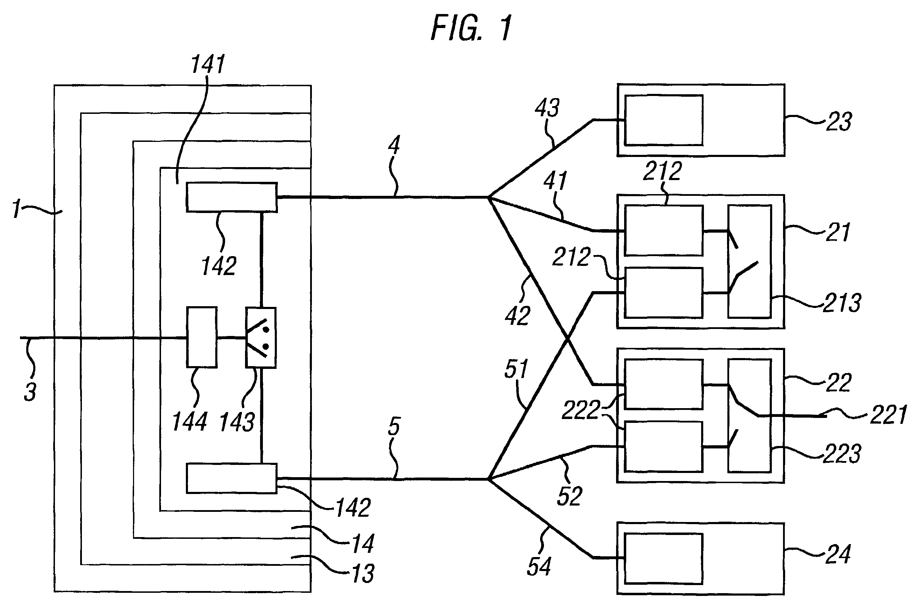

Figure 1 shows an example of a point-to-multipoint data network in which a method according to the invention can be applied. The shown network includes a first network end node 1 connected to a multiple of second network end nodes 21-24 by first connections 4, 41-43. Second network end nodes 21-22 are protected second network end nodes also connected to the first network end node 1 by second connections 5,51-52. Second network end node 24 is connected to the first network end node only by means of second connections 5, 54. The network consists of six point-to-point parts 1,21,4,41; 1,22,4,42; 1,23,4,43; 1,24,5,54; 1,21,5,51; 1,22,5,52 of which four parts 1,21,4,41; 1,22,4, 42; 1,21,5,51; 1,22,5,52 constitute two protected point-to-point parts 1,21,4,41,5,51; 1,22,4, 42,5,52. These protected point-to-point parts further include second connection 5,51 resp. 5,52.

In the network shown in figs.1-3 the second network end nodes 21-24 are NT's and the first network end node 1 is an LT 1. The NTs 21-24 may for example be computers at home, or opto-electrical converters that convert incoming light pulses into current pulses as used to adapt data from a optical fibre for further transmission through a copper wire. In the shown example, the first network end node 1 is a single physical device 1, but it is of course possible to provide in a logical first network end node 1 separated in several separate physical devices.

The point-to-multipoint network shown in figs. 1-3 is connected at the LT 1 to a, not shown, network by means of third connection 3 and is further connected to another, not shown, network via connection 221 of NT 22. Other NTs can be connected to other external networks in a likewise manner. However it is not necessary to connected any of the NTs to such an external network. Both external networks might be any type of network. The external network connected to the point-to-multipoint network via connection 3 might for example be a Wide Area Network and the network connected via NT 22 might for instance be a home network formed by a desktop computer and a laptop computer connected thereto. It should be apparent that the invention can likewise be applied in a stand-alone point-to-multipoint network not connected to other networks or in a point-to multipoint network connected to a different number of other networks.

LT 1 can be a router device, as is commonly known in the art Therefor, LT 1 is provided with router means 13. These router means 13 include a switch fabric 133 for transmitting data packets to the correct output port 12, a backplane 132 and other a connection device 131. The connection device 131 can for example perform traffic shaping functions. It is likewise possible to provide in an LT 1 being a switch device with switch means 13, as is also commonly known in the art.

In the shown example the protected point-to-point parts 1,21,4,41,5,51; 1,22,4, 42,5,52 are 1+1 protected point-to-point parts 1,21,4,41,5,51; 1,22,4, 42,5,52, that is, network signals or data packets are transmitted simultaneously via the first connection 4,41; 4,42; 4,43; 5,54 and the second connection 5,51; 5,52. It should be noted that although the shown protection is of a 1+1 type, it is likewise possible to apply the invention to a point-to-multipoint network wherein the protected point-to point parts 1,21,4,41,5,51 and 1,22,4,42,5,52 are for example 1+2 (where each connection is triplicated) or 1:1 protected. If 1:1 protected-point-parts are used it is possible to use the for protection not required capacity of a redundant connection and redundant end node for extra data traffic too if the working path is intact. The extra data traffic will then be pre-empted when the working path is failing.

The invention is of course not limited to the network in fig. 1, other configurations should be apparent to the skilled person.

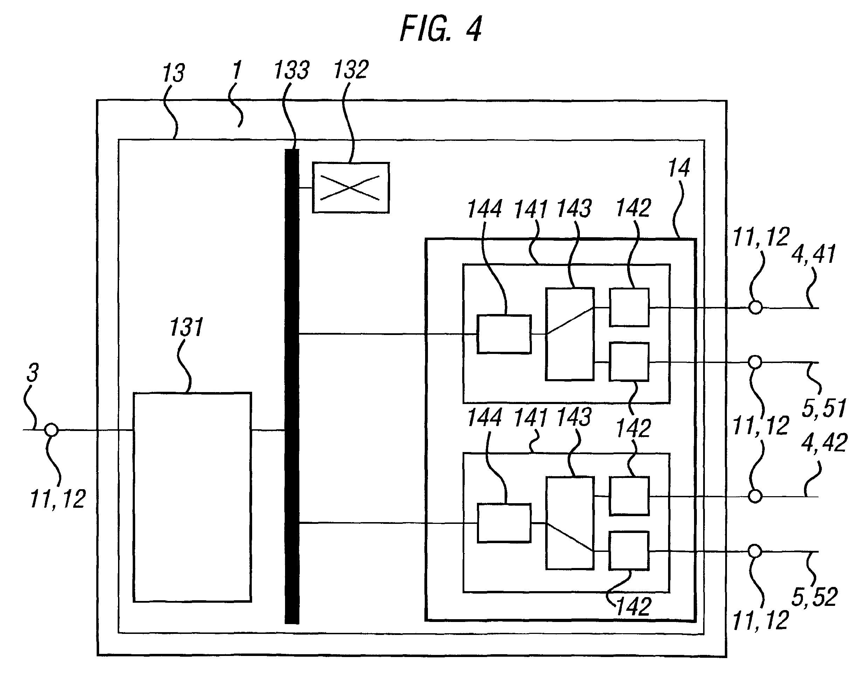

LT 1 is adapted for performing a protection switching method according to the invention. As is shown in fig. 4, LT 1 includes three input ports 11 and three output ports 12. For the sake of simplicity the input and output ports 11,12 are depicted as the same device. The LT 1 is connected to the first connection 4,41-43 via one of the input ports 11 and one of the output ports 12, and the LT 1 is further connected to the second connection 5,51-52, 54 via another input port 11 and output port 12. The LT 1 further includes a protection switch 14 for protection switching in the point-to-multipoint network. This protection switch 14 is connected to the input output ports 11,12 that are connected to the first connections 4,41-43 and second connections 5,51-52,54.

As is further shown in figure 4, the protection switch 14 includes a linear protection switch 141 for linear protection switching separate point-to-point parts 1,21,4,41; 1,22,4,42; 1,23,4,43; 1,21,5,51; 1,22,5,52; 1,24,5,54 of the point-to-multipoint network. These linear protection switches 141 enable protection switching of only a point-to-point part 1,21,4,41; 1,22,4,42; 1,23,4,43; 1,21,5,51; 1,22,5,52; 1,24,5,54 for which the first connection is out of order, for example because of a cable cut or to much electro-magnetic noise from outside. In this way it is not necessary to switch the entire network to the second connection 5,51;5,52;5,54 if a single connection fails. Because only one point-to-point part is switched 1,21,4,41; 1,22,4,42; 1,23,4,43; 1,21,5,51; 1,22,5,52; 1,24,5,54, unprotected network end nodes 23,24 stay connected in the network. In the shown example linear switches 141 are provided for the protected point-to-point parts only, but is it is also possible to provide linear switches 141 for all point-to-point parts 1,21,4,41; 1,22,4,42; 1,23,4,43; 1,21,5,51; 1,22,5,52; 1,24,5,54, whereby unprotected point-to-point parts are just disconnected if a switching condition is fulfilled. It should be noted that in the shown example the NT 22 connected to the failing connection 42 is switched but it is likewise possible to correlate switching of another NT to this failing connection. In the shown example if one of the connections 4,5 fails, all NTs are switched to the still intact one of these connections 4,5.

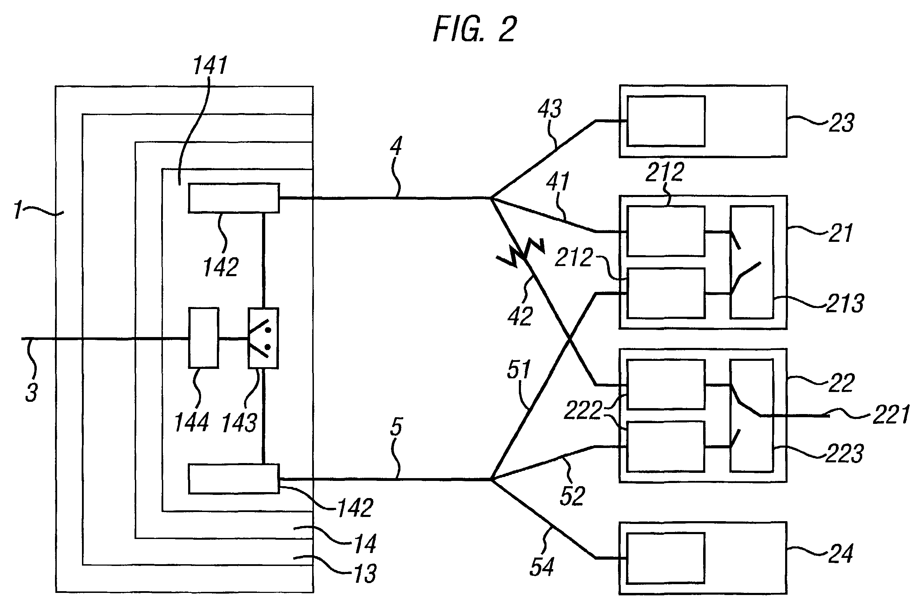

The linear protection switch 141 includes two sets of signal failure or signal degrade check means 142. These signal failure or signal degrade check means 142 determine a certain property of a data packet or a network signal transmitted from the second network end node to the first network end node simultaneously via the first and second connection. The determined property of the packet or signal is transmitted to the conditional switch 143. This conditional switch 143 compares the determined properties from the different connections with each other. Depending on the result of this comparison the conditional switch 143 switches to one of the connections for the specific point-to-point for which the comparison is made. So, in fig 2 connections 42 is damaged and only a weak or no signal will reach network end node 1. The signal failure or signal degrade check means 142 will now determine for both the first and the second connection the strength of the signal. This strength is passed to conditional switch 143. This conditional switch 143 compares both strengths and determines that the strength of the signal transmitted via the second connection is better than the strength of the signal transmitted via the first connection. Then, since the signal fail or degrade condition is to choose the signal with the largest strength the conditional switch 143 switches to the second connection 5,52.

Other point-to-point parts 1,21,4,41; 1,22,4,42; 1,23,4,43; 1,21,5,51; 1,22,5,52; 1,24,5,54 may be switched to another connection and there is no dependency between switching of different parts. As can be seen in fig. 1-3, for NT 21 the second connection 5,51 is selected while NT 22 is switched from first connection 4,42 to second connection 5,52.

The linear switch 141 is provided with signal fail or signal degrade check means 142 for performing a signal fail or signal degrade check. These signal fail or signal degrade check means 142 check a part of a data packet transmitted via the first connection 4 and second connection 5. This check could include checking the packet for bit errors or determining a certain property of the content of the data packet. It is likewise possible to provide the linear switch 141 with signal fail or signal degrade check means arranged as quality check means for checking a quality, for example signal to noise ratio or signal delay of a network signal, without investigating the content of the network signal. It should be apparent that it is also possible to provide means able to perform both types of signal fail or signal degrade checks. The linear switch is further provided with other function means 144 for performing other connection specific functions, like routing and forwarding of Ethernet packets, IP packets or terminating an ATM virtual connection.

The conditional switch 143 switches with both type of check means 142 if a certain condition is fulfilled, for example if the signal to noise ratio of the network signal transmitted via said first connection is lower than the signal to noise ratio of the network signal transmitted via the at least one second connection or if the transmitted data packet contains an error. It should be apparent that this condition might be any condition appropriate in the specific context.

The data packet may include a payload part containing data transmitted via the network signal and an overhead part including information about the network signal. In such case the payload part transmitted may be similar for all connections 4,41-43,5,51-52,54 and the overhead part may differ for all connections 4,41-43,5,51-52,54, whereby the overhead part transmitted via each connection 4,41-43,5,51-52,54 contains information about the corresponding payload and the used connection 4,41-43,5,51-52,54, so the signal fail or signal degrade check means 142 can identify the connection 4,41-43,5,51-52,54 via which the network signal or data packet on which the signal fail or signal degrade check is performed is transmitted.

The LT 1 switches in an unidirectional way, where only the first connection will be used. The NTs 21,22 shown, are also provided with a protection switch 212-213;222-223 as is described and seen from the NT to the LT the NTs form therefor first network end nodes too. This offers the possibility to perform a signal fail or signal degrade check at both sides, making the protection switching even more reliable. In that case failure of one network end node will not affect the protection switching capacity of the network, because there will still be network end nodes to perform the signal fail or signal degrade check and switch to the second connection.

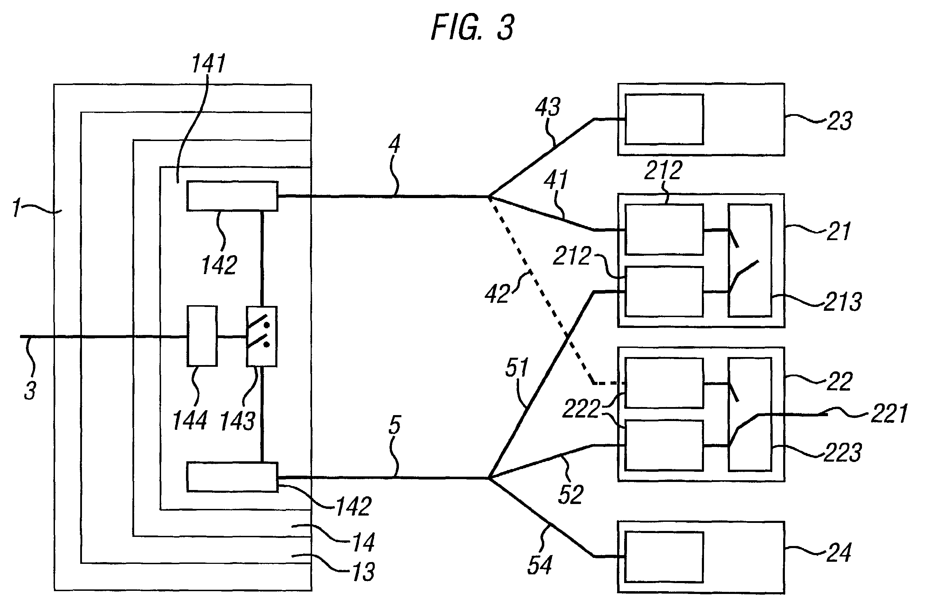

Since the NT 22 will not receive any network signal from the LT 1 via the first connection 4,42, as is indicated in fig. 3 by means of dotted line 42, the signal fail or signal degrade check means 222 will activate the conditional switch 223 NT 22 too will switch to the second connection 5,52. It is also possible to provide the protection switch 14 with error notifying means that notify the second network end node that the first network end node will switch. In such bi-directional switching it is ensured that first and second network end nodes use the same path. However, it is supposed that unidirectional switching as described can also result in a bi-directional switch due to protocols external of the switching mechanism

If desired, the NT 21, 22 may include a working and a redundant part, whereby the entire network is duplexed and maximal protection is achieved. In this case the data flow may be re-routed to the redundant part, whereby a failing part proper will be compensated for.

The connections 4, 5, 41-43, 51-52 may be of any suitable kind, for example copper wires, coax cables, wireless or optical fibre cables. If an optical fibre cable is used as a connection, the LT 1, the second network end nodes 21-24 may be passive optical network end nodes.

This allows the point-to-multipoint data network to be a Passive Optical Network, thereby making an extremely fast and also reliable connection possible. But it should be apparent to the worker in this field that any type of point-to-multipoint network can be used.

If an ATM PON-type (APON) network is used, it is even more advantageous to comply with the network architecture standard laid down in G.983.1. The example shown in fig. 1-3 is in compliance with this standard. Compliance with the standard allows compatibility with devices from other manufacturers without the necessity of a standardised protocol. In an APON, the standardised OAM cell can be used as a signal fail or signal degrade check signal. Thus, in fact, the necessary means for sending and detecting the signal fail or signal degrade check signal are already present. As a result, there is no need for additional means for generating and checking the signal fail or signal degrade check signal.

It should be apparent to skilled person that the invention is not limited to application in a physical network end node or point-to-multipoint network but can likewise be applied in a logical network end node or point-to-multipoint network of a more abstract kind.

## Claims

1. A method for protection switching in a point-to-multipoint network, the point-to-multipoint network including a first network end node (1) connected by at least one first connection (4,41-43) to at least one second network end node (21-24), wherein at least one protected second network end node (21-22) of the at least one second network end nodes (21-24) is further connected via at least one second connection (5,51;5,52;5,54) to said first network end node (1),
**characterised in that**,
as protection switching method a linear protection switching method is applied to at least one point-to-point part (1,21,4,41; 1,22,4,42; 1,23,4,43; 1,21,5,51; 1,22,5,52; 1,24,5,54) of the point-to-multipoint network independently of switching of other point-to-point parts(1,21,4,41; 1,22,4,42; 1,23,4,43; 1,24,5,54; 1,21,5,51; 1,22,5,52), whereby a point-to point part (1,21,4,41; 1,22,4,42; 1,23,4,43; 1,24,5,54; 1,21,5,51; 1,22,5,52) includes said first network end node (1) connected to one second network end node (21-24) via at least one of said first connections (4,41-43) and second connections (5,51-52,54).

2. A method for protection switching as claimed in claim 1, wherein the method is applied in a 1+1 protected point-to-point part (1,21,4,41,5,51; 1,22,4,42,5,52) whereby a protected point-to-point part (1,21,4,41,5,51;1,22,4,42,5,42) includes at least one point-to-point part (1,21,4,41; 1,22,4,42; 1,23,4,43; 1,24,5,54; 1,21,5,51; 1,22,5,52) connecting said first network end node (1) and said second network end node (21-24) via at least one of said at least one first connections (4,41;4,52;4,43) and a protected point to point part (1,21,4,41,5,51;1,22,4,42,5,42) further includes at least one point-to-point part (1,21,4,41; 1,22,4,42; 1,23,4,43; 1,24,5,54; 1,21,5,51; 1,22,5,52) connecting the same second network end node (21-22) to said first network end node (1) via a at least one of said at least one second connections (5,51;5,52;5,54).

3. A method for protection switching as claimed in claim 1, wherein the method is applied in a 1:1 protected point-to-point part (1,21,4,41,5,51; 1,22,4,42,5,52).

4. A method for protection switching as claimed in any of the claims 1-3, wherein as linear protection switching method an unidirectional protection switching method is used.

5. A method for protection switching as claimed in any of the claims 1-3, wherein as the linear protection switching method a bi-directional protection switching method is used.

6. A method for protection switching as claimed in any of the preceding claims, wherein said linear protection switching method includes the steps of: performing a signal fail or signal degrade check for each first connection (4,41-43) and each second connection (5,51;5,52;5,54) of a protected point-to-point part (1,21,4,41,5,51;1,22,4,42,5,42), and if the result of the signal fail or signal degrade check satisfies a switch condition: switching a point-to-point part (1,21,4,41; 1,22,4,42; 1,23,4,43; 1,21,5,51; 1,22,5,52; 1,24,5,54) associated with said switch condition to said at least one of the at least one second connections (5,51,5,52:5,54), said switching step including disconnecting the first connections (4,41-43) to the second network node (21-24) of the point-to-point part (1,21,4,41; 1,22,4,42; 1,23,4,43; 1,21,5,51; 1,22,5,52; 1,24,5,54) associated with said switch condition and if this second network end node (21-24) is a protected second network end node (21-22): re-routing a data flow from or to the protected second network end node (21-22) via the second connections (5,51-52,54) connected to the protected second network end node (21-22),

7. A method for protection switching as claimed in claim 6, wherein the steps of performing the signal fail or signal degrade check and switching to the second connection (5,51-52,54) are performed at the same network end node (1,21-24).

8. A method for protection switching as claimed in claim 7, wherein the method is performed at the protected second network end node (21-22).

9. A method for protection switching as claimed in any of the claim 7, wherein the method is performed at the first network end node (1).

10. A method for protection switching as claimed in any of the claims 4, 6-8, wherein the signal fail or signal degrade check includes the step of checking at the protected second network end node (21-22) the quality of a network signal transmitted from the first network end node (1) to the protected second network end node (21-24) via simultaneously said first connection (4,41-43) and said at least one second connection (5,51-52,54) and the switch condition is satisfied if the quality of the network signal transmitted via said first connection (4,41-43) is lower than the quality of the network signal transmitted via the at least one second connection (5,51-5,54).

11. A method for protection switching as claimed in any of the claims 4,6-8, wherein the signal fail or signal degrade check includes the step of checking at the protected second network end node (21-22) the quality of a data packet transmitted from the first network end node (1) to the protected second network end node (21-24) via simultaneously said first connection (4,41-43) and said at least one second connection (5,51-52,54) and the switch condition is satisfied if the quality of the network signal transmitted via said first connection is lower than the quality of the data packet transmitted via the at least one second connection (5,51-52, 54).

12. A method for protection switching as claimed in claim 11, wherein the network signal includes a payload part containing data transmitted via the network signal and an overhead part including information about the network signal and the transmitted payload part is similar for all connections (4,41-43;5,51-52,54) and the overhead part is different for at least some connections (4,41-43;5,51-52,54), whereby the transmitted overhead part contains information about the corresponding payload and the connection the overhead part is transmitted by, and the step of performing a signal fail or signal degrade check includes checking the quality of the overhead for each of the connections (4,41-43;5,51-52,54) via which the network signal is transmitted.

13. A method for protection switching as claimed in any of the preceding claims, wherein as a first network end node (1) a Line Termination device is used, and as the at least one second network end node (21-24) a Network Termination device is used.

14. A method for protection switching as claimed in any of the claims 1-13, wherein as a first network end node (1) a Network Termination device is used.

15. A method for protection switching as claimed in any of the preceding claims, wherein the method is applied in an PON network.

16. A first network end node (1) arranged for protection switching, including: at least one input port (11); at least one output port (12); and a protection switch (14) for protection switching in a point-to-multipoint network, the protection switch (14, 212-213,222-223) being connected to said input port (11) and said output port (12), said first network end node being connected to a first connection via at least one of the at least one input ports and at least one of the at least one output ports;
**characterised in that**
the protection switch (14) includes at least one linear protection switch (141,212-213,222-223) for linear protection switching a separate point-to-point part of a point-to-multipoint network independently of switching of other point-to-point parts of said point-to-multipoint network, wherein a point-to point part includes at least said first network end node (1) connected to one second network end node (21-24).

17. A first network end node as claimed in claim 16, wherein the linear protection switch (141) is an unidirectional protection switch for either switching data transmitted by the first network end node (1) or switching data received by the first network end node (1).

18. A first network end node as claimed in claim 16, wherein the linear protection switch is a bi-directional protection switch for switching both data transmitted by the first network end node (1) and received by the first network end node (1).

19. A first network end node as claimed in any of the claims 16-18, wherein said linear protection switch (141,212-213,222-223) includes signal fail or signal degrade check means (141).

20. A first network end node as claimed in claim 19, wherein said linear protection switch (141,212-213,222-223) further includes at least one conditional switch (143,213,223) connected to said at least one signal fail or signal degrade check means (142,212, 222).

21. A first network end node as claimed in claim 20, wherein the signal fail or signal degrade check means (142) include signal quality check means for checking the quality of a network signal transmitted to the first network end node (1) via simultaneously said first connection (4,41-43) and at least one second connection (5,51-52,54) connected to said second network end node (21-24) and for activating the linear protection switch (141) if the quality of the network signal transmitted via said first connection (4,41-43) is lower than the quality of the network signal transmitted via the at least one second connection (5,51-52,54).

22. A first network end node as claimed in claim 20 or 21, wherein the signal fail or signal degrade check means (142) include data packet check means for determining errors in the network signal transmitted to the first network end node (1) via simultaneously said first connection (4,41-43) and said at least one second connection (5,51;5,52;5,54) and for activating the linear protection switch (141) if an error is detected in the network signal transmitted via the first connection (1).

23. A first network end node as claimed in claim 22, wherein the data packet includes a payload part containing data transmitted via the data packets and an overhead part including information about the network signal and the payload part transmitted is similar for all connections (4,41-43;5,51-52,54) and the overhead part is different for all connections (4,41-43;5,51-52,54), whereby the overhead part transmitted via each connection (4,41-43,5,51-52,54) differs at least in that the overhead part contains information about the connection (4,41-43;5,51-52) the data packet is transported by.

24. A first network end node as claimed in any of the claims 16-20, wherein the first network end node (1) is further connected to another network via at least one third connection (3) connected to at least one of the at least one input ports (11) and output ports (12).

25. A first network end node (1) as claimed in any of the claims 16-21, wherein the first network end node (1) further includes a router device (13,131-133) for routing data packets transmitted to said first network end node (1) to one of the at least one output ports (12), said router device (13,131-133) being connected to the protection switch (14).

26. A first network end node (1) as claimed in any of the claims 16-21, wherein the first network end node (1) further includes a switch device (13,131-133) for switching data packets transmitted to said first network end node (1) to one of the at least one output ports (12), said switch device (13,131-133) being connected to the protection switch (14).

27. A first network end node as claimed in any of the claims 16-26, wherein said first network end node (1) is a Line Termination device and said at least one second network end node (21-24) is a Network Termination device.

28. A first network end node as claimed in any of the claims 16-26, wherein said first network end node (1) is a Network Termination device.

29. A first network end node as claimed in any of the claims 16-28, wherein said first network end node (1), said second network end nodes (21-24) are a optical network end nodes, said first connection (4,41-43) and said at least one second connection (5,51-52,54) are optical fibre connections.

30. A first network end node as claimed in any of the claims 16-28, wherein said first network end node (1), said second network end nodes (21-24) are a wireless network end nodes, said first connection (4,41-43) and said at least one second connection (5,51-52,54) are wireless connections.

31. A first network end node as claimed in any of the claims 16-28, wherein said first connection (4,41-43) and said at least one second connection (5,51-52,54) are electrical wire connections.

32. A network end node system comprising at least one first network end node being connected by at least one first connection (4,41-43) to at least one second network end node (21-24), wherein at least one of the at least one second network end nodes (21-22) is a protected second network end node (21-24) further connected to said first network end node (1) via at least one second connection (5,51-52,54) **characterised in that** at least one of the at least one first network end nodes is a first network end node as claimed in any of the claims 16-31.

33. A point-to-multipoint network, including at least one network end system as claimed in claim 32.

34. A point-to-multipoint network, as claimed in claim 32 **characterised in that**, the network is an passive optical network.

35. A point-to-multipoint network, as claimed in claim 34 **characterised in that**, the network is in accordance with ITU recommendation G.983.1 Option C.
